# EUROPÄISCHE PATENTSCHRIFT

(11) **EP 2 693 079 B1**
(45) Veröffentlichungstag und Bekanntmachung des Hinweises auf die Patenterteilung: **07.09.2016**
(21) Anmeldenummer: 13401074.3
(22) Anmeldetag: 18.07.2013
(51) Int. Cl.: F16H 1/28, F16H 57/12

(54) **Planetengetriebe sowie ein mit einem solchen Planetengetriebe ausgestattetes Handhabungsgerät**
Planetary gear mechanism and a handling device equipped with such a planetary gear
Train épicycloïdal et appareil de manipulation équipé d'un tel train épicycloïdal

(30) Priorität: 31.07.2012 DE 102012015051
(43) Veröffentlichungstag der Anmeldung: 05.02.2014
(73) Patentinhaber: Premium Stephan Hameln Zweigniederlassung der Premium Stephan B.V., 31789 Hameln (DE)
(72) Erfinder: Klünder, Frank, 30439 Hannover (DE)
(74) Vertreter: Scheffler, Jörg

(56) Entgegenhaltungen:
- EP-B1- 0 084 197
- DE-A1- 3 734 462
- DE-B- 1 069 975
- DE-U1- 9 405 495

## Beschreibung

Die Erfindung betrifft ein Planetengetriebe mit einem kegeligen Zahnradpaar mit mehreren, jeweils als Planetenrad ausgeführten ersten Zahnrädern mit einer ersten Drehachse, einem als Hohlrad ausgeführten zweiten Zahnrad mit einer zweiten, parallel zu der ersten Drehachse verlaufenden Drehachse, wobei die ersten Zahnräder und das zweite Zahnrad parallel zu der ersten Drehachse relativ zueinander axial verschiebbar angeordnet sind, einem als Sonnenrad ausgeführten Zahnrad mit einer Verzahnung und mit einer Stellvorrichtung, durch die im Betrieb die kegelige Verzahnung des ersten Zahnrades und die kegelige Verzahnung des zweiten Zahnrades im Wesentlichen spielfrei ineinandergreifen. Weiterhin betrifft die Erfindung ein mit einem solchen Planetengetriebe ausgestattetes Handhabungsgerät.

Die gattungsbildende DE 37 34 462 A1 beschreibt bereits ein derartiges Planetengetriebe mit ineinandergreifenden Zahnrädern, die eine entgegengesetzt konisch geformte Verzahnung aufweisen, wobei zumindest eines der beiden Zahnräder relativ zu dem anderen Zahnrad in Richtung des anderen Zahnrades axial verschiebbar ist. Die Planetenräder sind auf einer drehfest angeordneten Achse gelagert, die durch einen in axialer Richtung einstellbaren Bolzen gebildet ist. Die Position der Planetenräder ist während des Betriebes nicht veränderlich, sodass die Einstellung der Planetenräder eine Demontage des Planetengetriebes erfordert.

Aus der DE 94 05 495 U1 ist es bekannt, bei einem Zahnradgetriebe eine ein konisches Zahnrad tragende Welle mittels einer Feder, beispielsweise einer Schraubenfeder, gegebenenfalls unter Vermittlung einer Druckkugel gegenüber einem ebenfalls konischen Zahnrad vorzuspannen.

Kegelige, konische Zahnräder mit über der Breite veränderlicher Profilverschiebung sind als Zahnradpaar mit parallelen Achsen bekannt. Sie sind dazu geeignet, über eine axiale Verstellung eines bzw. beider Zahnräder einen spielfreien Eingriff einzustellen.

Zahnradverzahnungen werden auch in Planetengetrieben für Handhabungsautomaten (z.B. Knickarmroboter, Verstelleinheiten, Drehtische usw.) mit hoher Genauigkeit verwendet. Planetengetriebe in diesen Bereichen zeichnen sich durch hohe übertragbare Drehmomente in kompakten Bauabmessungen mit sehr guten Wirkungsgraden aus. Außerdem können diese Getriebe später als kompakte Einheit in Maschinen integriert werden.

Die hohe Leistungsdichte wird durch mehrfache Zahneingriffe (Sonnenrad, Planetenräder und Hohlrad) erreicht. Achsabstandsänderungen im Planetenträger sowie Fertigungseinflüsse der Verzahnungen (z.B. Toleranzschwankungen bei deren Herstellung) haben direkten Einfluss auf die Zahneingriffe.

Hierdurch ist in der Herstellung eine hohe Qualität zur Sicherung des geringen Zahnspiels notwendig. Dieses Zahnspiel hat großen Einfluss auf die Positioniergenauigkeit der Handhabungsautomaten. Diese Getriebe haben feststehende Beziehungen zwischen den Zahneingriffen (Achsabstand, Zahnmessweiten der Zähne usw.). Ein hohes Ausgangszahnspiel bewirkt eine zusätzliche Vergrößerung des Zahnspiels (durch Verschleiß) über die Getriebelebensdauer.

Wegen der unumgänglichen Toleranzen werden diese Planetengetriebe mit einem Lastverteilungsfaktor berechnet. Diese Berechnung soll die unterschiedliche Lastverteilung in den Planetenzahnrad-Eingriffen kompensieren. Um den Lastverteilungsfaktor positiv zu beeinflussen, ist es erforderlich, die Fertigungstoleranzen zu minimieren und das Zahnspiel der Getriebeanordnungen zu verringern. Dies erhöht den Fertigungs- und Bearbeitungsaufwand an allen Komponenten, welche das Zahnspiel beeinflussen.

Insbesondere bei Planeten- oder Umlaufgetrieben, die aus einer Vielzahl ineinandergreifender Komponenten zusammengesetzt sind und bei denen sich damit die Toleranzen der Einzelkomponenten gegenseitig sehr stark beeinflussen, ist der Fertigungsaufwand vergleichsweise hoch. Auch die Verwendung kegeliger bzw. konischer Zahnräder allein reicht in der Regel nicht aus, da die Einstellung einer Zahnradpaarung die Einstellung einer anderen Zahnradpaarung beeinflussen kann (z.B. die Einstellung mehrerer auf ein Sonnen- bzw. Hohlrad wirkender Planetenräder).

Der Erfindung liegt daher die Aufgabe zugrunde, ein verbessertes Planetengetriebe mit einem kegeligen Zahnradpaar zur Verfügung zu stellen. Insbesondere soll ein spietfreies Ineinandergreifen ohne einen zusätzlichen Wartungs- oder Justageaufwand realisiert bzw. das Zahnspiel über die Betriebszeit beseitigt oder wenigstens verringert werden. Weiterhin soll ein mit einem solchen Planetengetriebe ausgestattetes Handhabungsgerät geschaffen werden.

Diese Aufgabe wird durch ein Planetengetriebe gemäß dem Patentanspruch 1 gelöst. Vorteilhafte Ausführungsformen des erfindungsgemäßen Planetengetriebes sind Gegenstand der abhängigen Patentansprüche und ergeben sich aus der nachfolgenden Beschreibung der Erfindung.

Die Aufgabe wird gelöst, indem die Planetenräder jeweils zweistufig ausgeführt sind, derart, dass jedes Planetenrad eine kegelige Verzahnung aufweist, die mit dem Hohlrad kämmt, und eine zweite, nicht kegelige Verzahnung aufweist, die mit einer Verzahnung des Sonnenrades kämmt. Erfindungsgemäß wird dadurch die Möglichkeit geschaffen, eine einfache, wartungsfreie selbsttätige Nachstellung dadurch zu erreichen, dass nur die Planetenräder gegenüber dem Hohlrad vorgespannt werden.

Eine Überbestimmung (Rückwirkung) gegenüber dem Sonnenrad entfällt aufgrund der zweistufigen Ausführung der Planetenräder, da diese durch den nicht konischen Bereich mit dem Sonnenrad verbunden sind. Diese Verbindung gestattet eine problemlose axiale Verschiebung, beispielsweise aufgrund von fertigungsbedingten Toleranzeinflüssen oder auch im Betrieb auftretenden Einwirkungen oder thermischen Dehnungen, ohne dass hiermit Funktionsbeeinträchtigungen oder Transmissionsverluste verbunden sind.

Durch die erfindungsgemäße Kombination einer konischen und einer nicht konischen Verzahnung jedes Planetenrades in Verbindung mit der entsprechenden Verzahnung des Sonnenrades bzw. des Hohlrades wird bei der gewünschten hohen Belastbarkeit zugleich auch ein selbsttätig wirksamer Toleranzausgleich realisiert.

Das Planetengetriebe gemäß der vorliegenden Erfindung weist dazu eine Stellvorrichtung auf, die axial auf das erste Zahnrad wirkt, indem sie dort eine axiale Wirkkraft aufbaut und/oder über die ein axialer Stellweg einstellbar ist. Die axiale Wirkkraft drückt oder zieht dabei die kegelige Verzahnung eines ersten Zahnrades axial in eine ebenfalls kegelige (Gegen-)Verzahnung des zweiten Zahnrades, sodass im Betrieb die beiden Verzahnungen des ersten und zweiten Zahnrades weitgehend spielfrei ineinandergreifen.

Die kegelige Verzahnung oder die zylindrische Verzahnung kann als Gradverzahnung (achsparallel), schräg (Schrägverzahnung) oder als Doppelschräg-Verzahnung ausgeführt sein. Ebenso kann die Verzahnung eine Beveloidverzahnung sein.

In einer Ausführung weist die Stellvorrichtung dafür einen die Wirkkraft ausübenden elastischen Stellkörper auf. Ein solcher elastischer Stellkörper bildet zusammen mit den anderen mehr oder weniger elastischen Komponenten ein Federsystem, welches die Verzahnung axial in den Zahnkontakt presst oder die Verzahnung axial in den Zahnkontakt zieht.

Vorzugsweise kann jedem als Planetenrad ausgeführten ersten Zahnrad jeweils eine Stellvorrichtung oder ein elastischer Stellkörper zugeordnet sein.

In einer weiteren Ausführung ist ein Stellelement vorgesehen, welches auf den elastischen Stellkörper wirkt bzw. einen Anschlag zum Begrenzen des Stellweges bildet. Damit steht eine konische Verzahnung mit Federsystem und Wegbegrenzung zur Verfügung, bei dem die Herstellungsqualität der Zahnräder sowie die Toleranzen der Achsabstände konstruktiv ausgeglichen werden und zugleich das Zahnspiel über die Getriebelebensdauer beseitigt wird. Die im Betrieb eines solchen Planetengetriebes resultierenden Kräfte an der konischen Verzahnung bewirken eine der Wirkkraft entgegengerichtete Stellkraft, die auf den elastischen Stellkörper wirkt und bei Überschreiten der Wirkkraft das erste Zahnrad axial verschiebt. Der Anschlag bildet dabei eine einstellbare Wegbegrenzung, die verhindert, dass die Verzahnung im Fall von hohen Lastspitzen über den eingestellten axialen Stellweg hinaus verstellt wird und außerhalb des zulässigen Zahnkontakts gerückt werden kann.

Es gibt Ausführungen, bei denen ein Zwischenelement vorgesehen ist, welches zwischen dem elastischen Stellkörper und dem Zahnrad die Wirkkraft überträgt und/oder als Anschlagpuffer zwischen Stellelement und erstem Zahnrad wirkt. Dabei wird das Zwischenelement dann gegen einen Anschlag gedrückt.

Es gibt Ausführungen, bei denen dieses Zwischenelement als Kugel ausgebildet ist, die interschiedlichen Werkstoff- bzw. Toleranzqualitäten zur Verfügung stehen.

Es gibt Ausführungen, bei denen der Stellkörper als Druckfeder, insbesondere als Schraubenfeder ausgebildet ist. Solche Schraubenfedern stehen ebenfalls in einem sehr breiten Spektrum unterschiedlicher Abmessungen, Kennwerte und Qualitäten zur Verfügung. Ebenso kann der Stellkörper ein federnder, elastomerer Kunststoffkörper sein.

Es gibt Ausführungen, bei denen die axiale Kraft bzw. der axiale Stellweg stufenlos einstellbar ist. Damit lassen sich Zahnradpaarungen individuell und sehr genau zueinander einstellen. Dies ist beispielsweise vorteilhaft, wenn mehrere (geringfügig unterschiedliche) Planetenräder, die als erste Zahnräder dienen, bezüglich eines Sonnen- bzw. Hohlrades, das als zweites Zahnrad dient, eingestellt werden müssen.

Dabei gibt es Ausführungen, bei denen diese stufenlose Verstellbarkeit über einen Gewindeabschnitt realisiert wird.

Über einen Schaft oder Zapfen, der zur Führung in einen elastischen Stellkörper hineinragt, insbesondere in eine Schraubenfeder oder durch einen elastomeren Kunststoffkörper, kann die Betriebssicherheit weiter erhöht werden.

Es gibt auch Ausführungen, bei denen zur verbesserten Führung am ersten Zahnrad eine Ausnehmung zur Aufnahme des Stellkörpers (z.B. einer Feder oder eines elastomeren Kunststoffes) und/oder des Zwischenelementes (z.B. einer Kugel) ausgebildet ist.

In einer bevorzugten Ausführungsform wird das erste Zahnrad bzw. werden die ersten Zahnräder durch die Planetenräder eines Planetengetriebes gebildet und das zweite Zahnrad als Hohlrad ausgebildet. Im Rahmen dieser Erfindung wird unter dem Begriff "Planetengetriebe" aber auch ein solches Getriebe verstanden, bei dem ohne Vorhandensein eines Sonnenrades ein außenverzahntes Innenrad, das im Rahmen dieser Erfindungsbeschreibung auch als "Planetenrad" beschrieben wird, auf der Innenverzahnung eines innen verzahnten Hohlrades umläuft. Insbesondere wird im Rahmen dieser Beschreibung unter dem Begriff "Planetengetriebe" auch ein Umlaufrädergetriebe oder kürzer Umlaufgetriebe verstanden. Bei derartigen Umlaufgetrieben gibt es beispielsweise Bauformen, bei denen das Getriebegehäuse nicht mit dem Fundament befestigt wird, sondern konzentrisch zu Antriebswelle und Abtriebswelle drehbar gelagert ist. Das Umlaufgetriebe kann Nebenwellen aufweisen, auf denen außenverzahnte Zahnräder sitzen, wobei die Achsen der Nebenwellen nicht mit der zentralen Achse des Gehäuses zusammenfallen. Diese Nebenwellen kreisen um die zentrale Achse und drehen sich dabei noch um sich selbst, wie Planeten die Sonne umwandern. Daher werden solche Getriebe meist als Planetenradgetriebe oder kürzer als Planetengetriebe, die umlaufenden Räder als Planetenräder oder kürzer als Planeten und die nicht umlaufenden Räder als Zentralräder auch als Sonnenräder bezeichnet.

Bei Ausführungen, bei welchen die Stellvorrichtung zwischen dem Planetenträger und den Planetenrädern wirkt, lässt sich das erfindungsgemäße Planetengetriebe besonders wartungs- und fertigungsfreundlich in ein Planetengetriebe integrieren, ohne dass dazu zusätzliche Sonderbauteile - abgesehen von den Stellvorrichtungen - vorzusehen wären.

Die unterschiedlichen Positionierungen der Handhabungseinheiten mit entsprechend ausgestatteten Planetengetrieben finden so in den Belastungszonen (Nennmoment) und nicht im Bereich der Lastspitzen statt. Hier ist das Federsystem aktiv und alle Planeten der Endstufe sind spielfrei in ihren Zahneingriffen eingestellt.

Die weitere Aufgabe, ein mit einem solchen Planetengetriebe ausgestattetes Handhabungsgerät zu schaffen, wird durch den Einsatz des Planetengetriebes bei Knickarmrobotem, Verstelleinheiten, Werkzeugwechslern, Drehtischen, Positioniereinheiten oder Solartrackern gelöst.

Die Erfindung wird nachfolgend anhand einer in den Zeichnungen dargestellten Ausführungsform eines erfindungsgemäßen Planetengetriebes näher erläutert. Darin zeigt:
- Fig. 1: zwei Ansichten eines erfindungsgemäßen Planetengetriebes;
- Fig. 2: eine weitere Ansicht des in Fig. 1 dargestellten Planetengetriebes;
- Fig. 3: ein teilmontiertes Planetengetriebe entsprechend der Ansicht in Fig. 2;
- Fig. 4: eine Schnittdarstellung (Schnitt C-C, Fig. 2) des in Fig. 1 und 2 dargestellten Planetengetriebes und
- Fig. 5: eine Schnittdarstellung (Schnitt D-D, Fig. 4) einer Stellvorrichtung für ein erfindungsgemäßes Planetengetriebe.

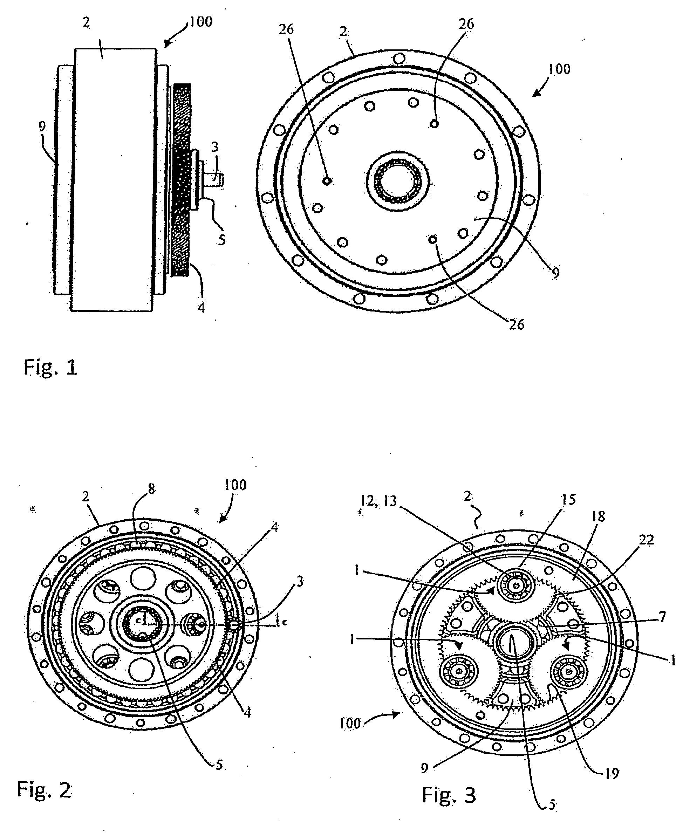

Die Figuren 1 bis 5 zeigen ein erfindungsgemäßes Planetengetriebe 100, in dem die erfindungsgemäße Zahnradanordnung 1 realisiert ist.

Das in den Figuren 1 und 2 in verschiedenen Ansichten dargestellte Planetengetriebe 100 umfasst ein Gehäuse 2, das zentral von einer Welle, hier in der Ausführungsform mit einer Hohlwelle 5 durchsetzt wird. Die Hohlwelle 5 trägt ein Antriebszahnrad 4, das mit einem Antriebsritzel 3 kämmt. Das Antriebsritzel 3 ist mit einem außerhalb des Planetengetriebes 100 liegenden - nicht weiter dargestellten - Antrieb verbunden.

Die Hohlwelle 5 trägt zwei Planetenträger 6 und 9, welche über die Wälzlager 7 und 8 bzw. 10 und 11, deren Laufflächen auch integraler Bestandteil des Gehäuses 2 bzw. der Planetenträger 6 und 9 sein können, drehbar bezüglich der Hohlwelle 5 und des Gehäuses 2 gelagert sind. Dabei sind die zwischen Hohlwelle 5 und Planetenträgern 6, 9 vorgesehenen Wälzlager 7 und 10 als vollständige Lager mit Außen- und Innenring ausgebildet, während bei den Wälzlagern 8 und 11 zwischen Planetenträgern 6, 9 und Gehäuse 2 der Innenring jeweils durch die Planetenträger 6 und 9 selbst gebildet wird und der Außenring in einer entsprechenden Aufnahme des Gehäuses 2 angeordnet ist.

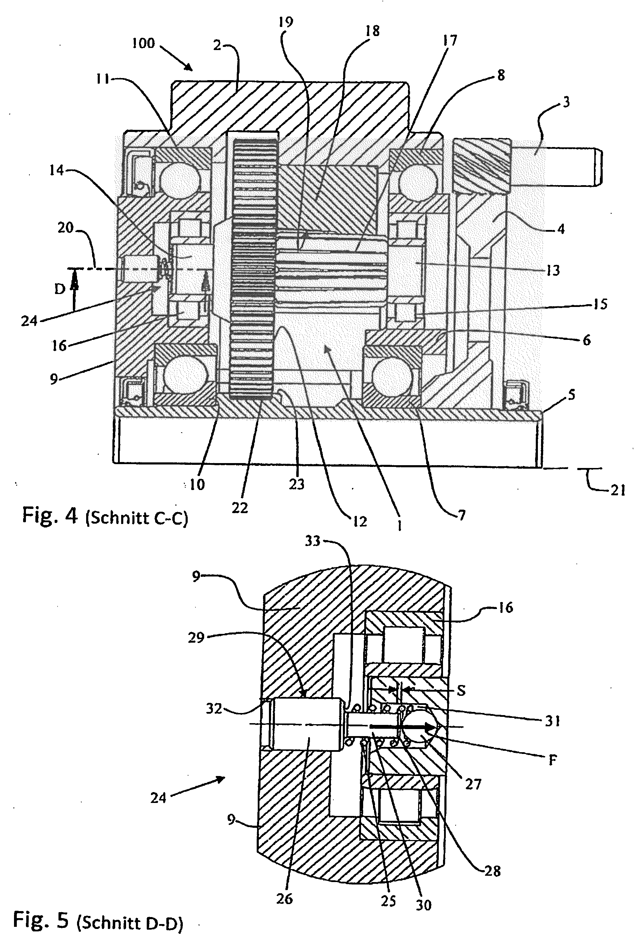

Zwischen den Planetenträgern 6 und 9 ist ein als zweistufiges Planetenrad 12 ausgebildetes erstes Zahnrad in den Lagern 15 und 16 gehalten, und zwar über die Lagerzapfen 13 und 14, um die das Planetenrad 12 drehbar um die erste Drehachse 20 gelagert ist (der genaue Aufbau ist der Fig. 4 entnehmbar).

Das dargestellte Planetengetriebe 100 weist drei solcher Planetenräder 9 auf.

Jedes der Planetenräder 12 weist eine kegelige Verzahnung 17 als erste Stufe auf, die mit dem Hohlrad 18 kämmt, das ebenfalls eine kegelige Verzahnung 19 aufweist und drehfest im Gehäuse 2 angeordnet ist. Eine eine zweite Stufe bildende gerade Verzahnung 22 des Planetenrades 12 kämmt mit einer Verzahnung 23, die als Sonnenrad dient und hier direkt an der Hohlwelle 5 ausgebildet ist.

Geht man von einem feststehenden Gehäuse 2 aus, passiert im Betrieb Folgendes: Das Antriebsritzel 3 treibt das Antriebszahnrad 4, über das die Hohlwelle 5 relativ zum Gehäuse in den Lagern 7 und 10 verdreht wird. Dabei kämmt die Verzahnung 23 des Sonnenrades jeweils mit der zweiten Verzahnung 22 der Planetenräder 12, deren kegelige Verzahnungen 17 mit der kegeligen Gegenverzahnung 19 des Hohlrades kämmen und entsprechend der gegebenen Übersetzungen eine (hier untersetzte) Relativbewegung der ersten Drehachsen 20 zum Hohlrad 18 und damit zum Gehäuse 2 des Planetengetriebes bewirkt. Das heißt, die Planetenräder 12 verändern ihre Drehlage um ihre ersten Drehachsen 20 und ihre Positionen im Gehäuse um die zweite Drehachse 21. Dabei verdrehen sie die Planetenträger 6 und 9 relativ zum Gehäuse 2 und zur Hohlwelle 5. Diese Relativdrehung wird durch die Lagerpaare 7 und 8 bzw. 10 und 11 ermöglicht. An den Planetenträger 9 kann ein anzutreibendes Element angekoppelt werden.

Die Figuren 4 und 5 illustrieren den Mechanismus, mit dessen Hilfe eine weitgehend spielfreie Verzahnung der kegeligen Verzahnung 17 des Planetenrades 12 und der kegeligen Verzahnung 19 des Hohlrades 18 gewährleistet wird.

Zwischen dem Planetenträger 9 und dem Planetenrad 12 wirkt eine Stellvorrichtung 24. Diese umfasst einen elastischen Stellkörper, der als zylindrische Druckfeder 25 ausgebildet ist und sich am Planetenträger 9 abstützend eine axiale Wirkkraft F entlang der Drehachse 20 auf das Planetenrad 12 ausübt und dieses mit seiner kegeligen Verzahnung 17 in die kegelige Verzahnung 19 des Hohlrades 18 drückt. In anderen Worten, die Druckfeder 25 presst die Zahnflanken der Verzahnungen 17 und 19 im Betrieb spielfrei zusammen. Dieser Mechanismus erlaubt es, Fertigungstoleranzen, die bei der Herstellung aller Komponenten auftreten, zu kompensieren und gleicht diese während des Betriebes dynamisch aus. Dadurch, dass die Wirkkraft F elastisch - also mit Spiel - auf die Planetenräder 12 aufgebracht wird, ist ein Axialspiel S (siehe Fig. 5) realisiert, welches die axialen Ausgleichsbewegungen der Planetenräder 12 zulässt, die beispielsweise durch Rundlauffehler erforderlich sind. Das heißt, der spielfreie Betrieb wird aufrechterhalten, ohne dass an den Zahnflanken der kegeligen Verzahnungen 17 und 19 übergroße Belastungen auftreten, da diese durch eine Axialbewegung der Planetenräder im Bereich des Axialspieles S gegen die Wirkkraft F ausweichen können.

Der genaue Aufbau der Verstellanordnung 24 ist der Fig. 5 zu entnehmen. Ein Stellelement 26 ist über einen Gewindeabschnitt 29 verstellbar in eine entsprechende Gewindebohrung 32 im Planetenträger 9 eingesetzt. Vom Gewindeabschnitt 29 geht ein Schaft 30 aus, der in eine Ausnehmung 31 hineinragt, die im Lagerzapfen 14 des Planetenrades 12 ausgebildet ist. In der Ausnehmung 31 ist ein als Kugel 27 ausgebildeter- gegebenenfalls elastischer-Zwischenkörper eingesetzt. An der Kugel 27 greift der als Feder 25 ausgebildete Stellkörper an. Die Feder 25 stützt sich an ihrem anderen Ende an einer Schulter 33 ab, die zwischen dem Schaft 30 und dem Gewindeabschnitt 29 verläuft. Die vorgespannte Feder 25 übt also sich über das Stellelement 26 am Planetenträger 9 abstützend eine Druckkraft (die Wirkkraft F) über die Kugel 27 auf das Planetenrad 12 aus.

Wie bereits oben beschrieben, kann sich das Planetenrad 12 um den Stellweg S axial gegen die Wirkkraft F verstellen. Bei sehr hohen Lastspitzen, die an der kegeligen Verzahnung 17 des Planetenrades 12 angreifen, wird dieses gegen die Wirkkraft F soweit verschoben (die Feder 25 wird zusammengedrückt), dass die Kugel 27 gegen den Anschlag 28 (die Stirnfläche des Schaftes 30) gesetzt wird. Die Kugel 27 dient dabei als verschleißminderndes oder gegebenenfalls auch zusätzlich dämpfendes Zwischenelement. Die Kugel 27 verhindert dabei auch, dass die Feder 25 "auf Block" zusammengeschoben wird.

Zum Einstellen des Stellweges S dient das Stellelement 26, das über sein Gewinde 29 axial in den Planetenträger 9 hinein- oder aus diesem herausgeschraubt werden kann. Damit kann der erforderliche Stellweg S individuell für jedes Planetenrad eingestellt werden. Der Stellweg S ist individuell für jedes Planetenrad 12 einstellbar.

Das oben geschilderte Prinzip lässt sich auch auf beliebige andere Zahnradverzahnungen übertragen.

Die Ausführung kann mit beliebig vielen Planetenrädern 12 ausgeführt werden. Es können auch ganz unterschiedlich viele Übersetzungsstufen dieser Planetenstufe vorgeschaltet werden.

Der Antrieb kann in koaxialer oder in paralleler Bauart konstruiert werden. Bei der hier beschriebenen parallelen Konstruktion gibt es die Möglichkeit, die Hohlwelle 5 für Kabel oder Zuleitungen im Zentrum zu nutzen.

## Patentansprüche

1. Planetengetriebe (100) mit
- mehreren, jeweils als Planetenrad ausgeführten ersten Zahnrädern (12) mit einer ersten Drehachse (20),
- einem als Hohlrad ausgeführten zweiten Zahnrad (18) mit einer zweiten, parallel zu der ersten Drehachse (20) verlaufenden Drehachse (21), wobei die ersten Zahnräder (12) und das zweite Zahnrad (18) in Richtung der ersten Drehachse (20) relativ zueinander axial verschiebbar angeordnet sind,
- einem als Sonnenrad (5) ausgeführten Zahnrad mit einer Verzahnung (23) und mit
- einer Stellvorrichtung (24) zur Erzeugung einer axialen Wirkkraft (F) und/oder eines axialen Stellweges (S) derart, dass eine kegelige Verzahnung (17) des ersten Zahnrades (12) axial gegenüber einer kegeligen Verzahnung (19) des zweiten Zahnrades (18) einstellbar und/oder vorspannbar ist, sodass im Betrieb die kegelige Verzahnung (17) des ersten Zahnrades (12) und die kegelige Verzahnung (19) des zweiten Zahnrades (18) im Wesentlichen spielfrei ineinandergreifen, **dadurch gekennzeichnet, dass** die als Planetenräder ausgeführten ersten Zahnräder (12) jeweils zweistufig ausgeführt sind, mit einer eine erste Stufe bildenden kegeligen Verzahnung (17), die mit dem Hohlrad (18) kämmt, und mit einer eine zweite Stufe bildenden, im Wesentlichen zylindrischen Verzahnung (22), die mit der Verzahnung (23) des als Sonnenrad (5) ausgeführten Zahnrades kämmt.

2. Planetengetriebe (100) nach Anspruch 1, bei welchem die kegelige Verzahnung (17) und/oder die zylindrische Verzahnung (22) als Gradverzahnung, Schrägverzahnung oder als Doppelschräg-Verzahnung ausgeführt ist.

3. Planetengetriebe (100) nach Anspruch 1 oder 2, bei welchem der maximale Durchmesser der kegeligen Verzahnung (17) wesentlich kleiner als der Durchmesser, insbesondere kleiner als die Hälfte des Durchmessers der zylindrischen Verzahnung (22) bemessen ist.

4. Planetengetriebe (100) nach einem der Ansprüche 1 bis 3, bei welchem die kegelige Verzahnung (17) und die zylindrische Verzahnung (22) in axialer Richtung unmittelbar aneinander angrenzen.

5. Planetengetriebe (100) nach einem der Ansprüche 1 bis 4, bei welchem jedem als Planetenrad ausgeführten ersten Zahnrad (12) jeweils eine Stellvorrichtung (24) und/oder ein elastischer Stellkörper (25) zugeordnet ist.

6. Planetengetriebe (100) nach einem der Ansprüche 1 bis 4, bei welchem die Stellvorrichtung (24) einen die Wirkkraft (F) ausübenden elastischen Stellkörper (25) umfasst.

7. Planetengetriebe (100) nach Anspruch 6, bei welchem die Stellvorrichtung (24) ein Stellelement (26) aufweist, welches auf den elastischen Stellkörper (25) wirkt und/oder einen Anschlag (28) zum Begrenzen des Stellweges (S) bildet.

8. Planetengetriebe (100) nach Anspruch 7, bei welchem Stellkörper (25) und/oder Stellelement (26) auf ein insbesondere als eine Kugel (27) ausgeführtes Zwischenelement wirken, welches die Wirkkraft (F) zwischen Stellkörper (25) und zumindest einem ersten Zahnrad (12) überträgt und/oder als Anschlagpuffer zwischen dem Stellelement (26) und dem erstem Zahnrad (12) wirkt.

9. Planetengetriebe (100) nach einem der Ansprüche 6 bis 8, bei welchem der Stellkörper (25) als Druckfeder, insbesondere als Schraubenfeder ausgebildet ist.

10. Planetengetriebe (100) nach einem der Ansprüche 1 bis 9, bei welchem die axiale Wirkkraft bzw. der axiale Stellweg (S) stufenlos einstellbar sind.

11. Planetengetriebe (100) nach einem der Ansprüche 7 oder 8, bei welchem das Stellelement (26) einen Gewindeabschnitt (29) aufweist, über den es relativ zu einem das erste Zahnrad (12) aufnehmenden Träger (9) verstellbar ist.

12. Planetengetriebe (100) nach einem der Ansprüche 7, 8 oder 11, bei welchem das Stellelement (26) einen Schaft (30) zur Aufnahme und Führung des elastischen Stellkörpers (25) aufweist.

13. Planetengetriebe (100) nach Anspruch 8, bei welchem am ersten Zahnrad (12) eine Ausnehmung (31) zur Aufnahme des Stellkörpers (25) und/oder des Zwischenelementes (27) ausgebildet ist.

14. Planetengetriebe (100) nach einem der Ansprüche 7, 8 oder 11 bis 13, bei welchem das Stellelement (26) in einem Planetenträger (9) verstellbar angeordnet ist.

15. Handhabungsgerät mit einem Planetengetriebe (100) nach einem der Ansprüche 1 bis 14.

## Claims

1. Planetary gear mechanism (100) having
- a plurality of first gearwheels (12) which are configured in each case as a planetary gear with a first rotational axis (20),
- a second gearwheel (18) which is configured as an internal gear with a second rotational axis (21) which runs parallel to the first rotational axis (20), wherein the first gearwheels (12) and the second gearwheel (18) are arranged such that they can be displaced axially relative to one another in the direction of the first rotational axis (20),
- a gearwheel which is configured as a sun gear (5) with a toothing system (23), and having
- an actuating apparatus (24) for generating an axial active force (F) and/or an axial actuating travel (S) in such a way that a bevel toothing system (17) of the first gearwheel (12) can be set and/or prestressed axially with respect to a bevel toothing system (19) of the second gearwheel (18), with the result that, during operation, the bevel toothing system (17) of the first gearwheel (12) and the bevel toothing system (19) of the second gearwheel (18) engage into one another substantially without play, **characterized in that** the first gearwheels (12) which are configured as planetary gears are of in each case two-stage configuration, with a bevel toothing system (17) which forms a first stage and meshes with the internal gear (18), and with a substantially cylindrical toothing system (22) which forms a second stage and meshes with the toothing system (23) of the gearwheel which is configured as a sun gear (5).

2. Planetary gear mechanism (100) according to Claim 1, in which the bevel toothing system (17) and/or the cylindrical toothing system (22) are/is configured as spur toothing, helical toothing or as double helical toothing.

3. Planetary gear mechanism (100) according to Claim 1 or 2, in which the maximum diameter of the bevel toothing system (17) is dimensioned to be substantially smaller than the diameter, in particular is dimensioned to be smaller than half the diameter of the cylindrical toothing system (22).

4. Planetary gear mechanism (100) according to one of Claims 1 to 3, in which the bevel toothing system (17) and the cylindrical toothing system (22) adjoin one another directly in the axial direction.

5. Planetary gear mechanism (100) according to one of Claims 1 to 4, in which each first gearwheel (12) which is configured as a planetary gear is assigned in each case one actuating apparatus (24) and/or one elastic actuating body (25).

6. Planetary gear mechanism (100) according to one of Claims 1 to 4, in which the actuating apparatus (24) comprises an elastic actuating body (25) which exerts the active force (F).

7. Planetary gear mechanism (100) according to Claim 6, in which the actuating apparatus (24) has an actuating element (26) which acts on the elastic actuating body (25) and/or forms a stop (28) for limiting the actuating travel (S).

8. Planetary gear mechanism (100) according to Claim 7, in which an actuating body (25) and/or an actuating element (26) act/acts on an intermediate element which is configured, in particular, as a ball (27), transmits the active force (F) between the actuating body (25) and at least one first gearwheel (12) and/or acts as a stop buffer between the actuating element (26) and the first gearwheel (12).

9. Planetary gear mechanism (100) according to one of Claims 6 to 8, in which the actuating body (25) is configured as a compression spring, in particular as a helical spring.

10. Planetary gear mechanism (100) according to one of Claims 1 to 9, in which the axial active force and the axial actuating travel (S) can be set in an infinitely variable manner.

11. Planetary gear mechanism (100) according to either of Claims 7 or 8, in which the actuating element (26) has a threaded section (29), via which it can be adjusted relative to a carrier (9) which receives the first gearwheel (12).

12. Planetary gear mechanism (100) according to one of Claims 7, 8 or 11, in which the actuating element (26) has a shank (30) for receiving and guiding the elastic actuating body (25).

13. Planetary gear mechanism (100) according to Claim 8, in which a recess (31) for receiving the actuating body (25) and/or the intermediate element (27) is configured on the first gearwheel (12).

14. Planetary gear mechanism (100) according to one of Claims 7, 8 or 11 to 13, in which the actuating element (26) is arranged adjustably in a planetary carrier (9).

15. Handling device having a planetary gear mechanism (100) according to one of Claims 1 to 14.

## Revendications

1. Train épicycloïdal (100) avec :
- plusieurs premières roues dentées (12) respectivement réalisées sous la forme d'une roue planétaire avec un premier axe de rotation (20) ;
- une deuxième roue dentée (18) réalisée sous la forme d'une roue creuse avec un deuxième axe de rotation (21) s'étendant parallèlement au premier axe de rotation (20), les premières roues dentées (12) et la deuxième roue dentée (18) étant disposées de façon à pouvoir se déplacer les unes par rapport aux autres dans le plan axial dans la direction du premier axe de rotation (20) ;
- une roue dentée réalisée sous la forme d'une roue solaire (5) avec un endentement (23) et avec :
- un dispositif de réglage (24) pour produire une force d'action (F) axiale et/ou une course de réglage (S) axiale de telle sorte qu'un endentement (17) conique de la première roue dentée (12) peut être réglé et/ou précontraint dans le plan axial par rapport à un endentement (19) conique de la deuxième roue dentée (18), de sorte qu'en fonctionnement, l'endentement (17) conique de la première roue dentée (12) et l'endentement (19) conique de la deuxième roue dentée (18) s'engrènent pour l'essentiel sans jeu, **caractérisé en ce que** les premières roues dentées (12) réalisées sous la forme de roues planétaires sont respectivement réalisées à deux niveaux, avec un endentement (17) conique formant un premier niveau s'engrenant avec la roue creuse (18) et avec un endentement (22) pour l'essentiel cylindrique formant un deuxième niveau s'engrenant avec l'endentement (23) de la roue dentée réalisée sous la forme d'une roue solaire (5).

2. Train épicycloïdal (100) selon la revendication 1, dans lequel l'endentement (17) conique et/ou l'endentement (22) cylindrique sont réalisés sous la forme d'un endentement droit, d'un endentement oblique ou d'un endentement à double inclinaison.

3. Train épicycloïdal (100) selon la revendication 1 ou 2, dans lequel le diamètre maximal de l'endentement (17) conique mesuré est pour l'essentiel plus petit que le diamètre, notamment plus petit que la moitié du diamètre, de l'endentement (22) cylindrique.

4. Train épicycloïdal (100) selon l'une quelconque des revendications 1 à 3, dans lequel l'endentement (17) conique et l'endentement (22) cylindrique sont directement connexes dans la direction axiale.

5. Train épicycloïdal (100) selon l'une quelconque des revendications 1 à 4, dans lequel un dispositif de réglage (24) et/ou un corps de réglage (25) élastique est respectivement associé à chaque première roue dentée (12) réalisée sous la forme d'une roue planétaire.

6. Train épicycloïdal (100) selon l'une quelconque des revendications 1 à 4, dans lequel le dispositif de réglage (24) comprend un corps de réglage (25) élastique exerçant la force d'action (F).

7. Train épicycloïdal (100) selon la revendication 6, dans lequel le dispositif de réglage (24) comporte un élément de réglage (26) agissant sur le corps de réglage (25) élastique et/ou formant une butée (28) pour délimiter la course de réglage (S).

8. Train épicycloïdal (100) selon la revendication 7, dans lequel le corps de réglage (25) et/ou l'élément de réglage (26) agissent sur un élément intermédiaire notamment réalisé sous la forme d'une sphère (27), ledit élément transmettant la force d'action (F) entre le corps de réglage (25) et au moins une première roue dentée (12) et/ou agissant, comme tampon de butée, entre l'élément de réglage (26) et la première roue dentée (12).

9. Train épicycloïdal (100) selon l'une quelconque des revendications 6 à 8, dans lequel le corps de réglage (25) est réalisé sous la forme d'un ressort de pression, notamment sous la forme d'un ressort à vis.

10. Train épicycloïdal (100) selon l'une quelconque des revendications 1 à 9, dans lequel la force d'action axiale et/ou la course de réglage (S) axiale sont réglables en continu.

11. Train épicycloïdal (100) selon l'une quelconque des revendications 7 ou 8, dans lequel l'élément de réglage (26) comporte une section filetée (29) via laquelle il peut être réglé par rapport au support (9) logeant la première roue dentée (12).

12. Train épicycloïdal (100) selon l'une quelconque des revendications 7, 8 ou 11, dans lequel l'élément de réglage (26) comporte une tige (30) pouvant recevoir et guider le corps de réglage (25) élastique.

13. Train épicycloïdal (100) selon la revendication 8, dans lequel un évidement (31) est réalisé au niveau de la première roue dentée (12) pour recevoir le corps de réglage (25) et/ou l'élément intermédiaire (27).

14. Train épicycloïdal (100) selon l'une quelconque des revendications 7, 8 ou 11 à 13, dans lequel l'élément de réglage (26) est disposé de façon à pouvoir être réglé dans un support planétaire (9).

15. Appareil de manipulation avec un train épicycloïdal (100) selon l'une quelconque des revendications 1 à 14.
